# FASCICULE DE BREVET EUROPEEN

(11) **EP 3 739 721 B1**
(45) Date de publication et mention de la délivrance du brevet: **21.07.2021**
(21) Numéro de dépôt: 20174462.0
(22) Date de dépôt: 13.05.2020
(51) Int. Cl.: B60L 50/53, H02J 9/06, H02M 1/10, H02M 7/219, H02M 3/158

(54) **DISPOSITIF D'ALIMENTATION EN ÉNERGIE ÉLECTRIQUE, CHAÎNE DE TRACTION ET VÉHICULE ÉLECTRIQUE ASSOCIÉS**
STROMVERSORGUNGSVORRICHTUNG, ENTSPRECHENDE ZUGKETTE UND ENTSPRECHENDES ELEKTROFAHRZEUG
DEVICE FOR SUPPLYING ELECTRICAL ENERGY, ASSOCIATED TRACTION CHAIN AND ELECTRIC VEHICLE

(30) Priorité: 13.05.2019 FR 1904928
(43) Date de publication de la demande: 18.11.2020
(73) Titulaire: ALSTOM Transport Technologies, 93400 Saint-Ouen (FR)
(72) Inventeur: ROUILLE, Bruno, 65200 ORDIZAN (FR); BLANC, Sébastien, 26000 VALENCE (FR)
(74) Mandataire: Lavoix

(56) Documents cités:
- WO-A1-2018/127946
- US-A1- 2016 211 749
- US-A1- 2017 086 329

## Description

La présente invention concerne un dispositif d'alimentation en énergie électrique pour véhicule électrique, notamment ferroviaire.

L'invention concerne également une chaîne de traction pour véhicule électrique, notamment ferroviaire, comprenant un tel dispositif d'alimentation.

L'invention concerne également un véhicule électrique, notamment ferroviaire, comprenant une telle chaîne de traction.

Le dispositif d'alimentation comprend un convertisseur d'énergie électrique. Le convertisseur d'énergie électrique comporte au moins deux bornes d'entrée, et deux bornes de sortie; pour chaque borne d'entrée, un bras de commutation comportant deux demi-bras de commutation connectés en série entre les deux bornes de sorties et reliés entre eux en un point intermédiaire, le point intermédiaire étant connecté à ladite borne d'entrée. Chaque demi-bras de commutation comporte au moins un interrupteur. Le convertisseur d'énergie électrique comporte un module de commande configuré pour commander les interrupteurs. Le dispositif d'alimentation comprend au moins deux premières bornes de connexion destinées à être connectées à une première source d'énergie électrique alternative, et une deuxième et une troisième borne de connexion destinées à être connectées à une deuxième source d'énergie électrique continue.

L'invention s'applique au domaine des transports, notamment au domaine des transports ferroviaires. Plus particulièrement, l'invention s'applique à l'alimentation électrique de véhicules électriques de traction, tels que les locomotives et les automotrices.

Les véhicules électriques ferroviaires sont généralement équipés de moteurs électriques. L'alimentation du moteur électrique d'un tel véhicule nécessite une tension continue d'amplitude définie. Cette tension continue est généralement utilisée pour alimenter un onduleur qui délivre directement au moteur électrique l'énergie électrique permettant son fonctionnement.

Pour alimenter un tel véhicule, il est connu d'utiliser une tension alternative, délivrée sur une caténaire, via un pantographe. Cette tension alternative est généralement convertie en tension continue adaptée pour l'alimentation de l'onduleur, à l'aide d'un transformateur et d'un convertisseur de tension alternative en tension continue, dit convertisseur AC/DC.

Par ailleurs, lorsque le véhicule circule sur une voie non-équipée de caténaire, il est nécessaire d'utiliser une batterie électrique (éventuellement couplée avec une pile à combustible) afin d'alimenter le véhicule. Une telle batterie électrique délivre une tension continue. La tension fournie par la batterie électrique peut être plus faible que la tension nécessaire pour l'alimentation de l'onduleur. Un convertisseur continu-continu, dit convertisseur DC/DC, tel qu'un hacheur, est alors utilisé pour amplifier cette tension continue, afin d'obtenir une tension continue adaptée pour l'alimentation de l'onduleur.

Cependant, une telle architecture électrique est relativement encombrante et coûteuse.

Le document US 2017/0086329 A1 divulgue un dispositif d'alimentation en énergie électrique comprenant une unité de refroidissement d'un circuit de conversion et une unité de refroidissement d'un onduleur.

Le document US 2016/211749 A1 divulgue un dispositif d'alimentation en énergie électrique comprenant un convertisseur DC/DC.

Le but de l'invention est alors de proposer un dispositif d'alimentation ayant un encombrement et un coût plus limités et une meilleure fiabilité.

A cet effet, l'invention a pour objet un dispositif d'alimentation selon la revendication 1.

Un tel dispositif d'alimentation permet d'éviter d'utiliser deux convertisseurs dédiés pour la conversion de la tension alternative issue de la première source d'énergie électrique alternative, et respectivement pour la conversion de la tension continue issue de la deuxième source d'énergie électrique continue, en utilisant un unique convertisseur comprenant deux modes de conversion propres aux deux types de conversion respectifs, et un module de commutation associé

Suivant d'autres aspects avantageux, le dispositif d'alimentation est selon l'une quelconque des revendications 2 à 8.

L'invention a également pour objet une chaîne de traction selon la revendication 9.

L'invention a également pour objet un véhicule électrique selon la revendication 10.

Ces caractéristiques et avantages de l'invention apparaîtront à la lecture de la description qui va suivre, donnée uniquement à titre d'exemple non limitatif, et faite en référence aux dessins annexés sur lesquels :
- la figure 1 est une représentation schématique d'un véhicule électrique de transport, tel qu'un véhicule ferroviaire, comprenant une chaîne de traction comportant un dispositif d'alimentation selon l'invention connecté à une première source d'énergie électrique, ainsi qu'une deuxième source d'énergie électrique, et
- la figure 2 est une représentation schématique de l'évolution temporelle de différentes intensités, notamment de l'intensité d'un courant circulant dans la deuxième source d'énergie électrique suivant différents cas de fonctionnement.

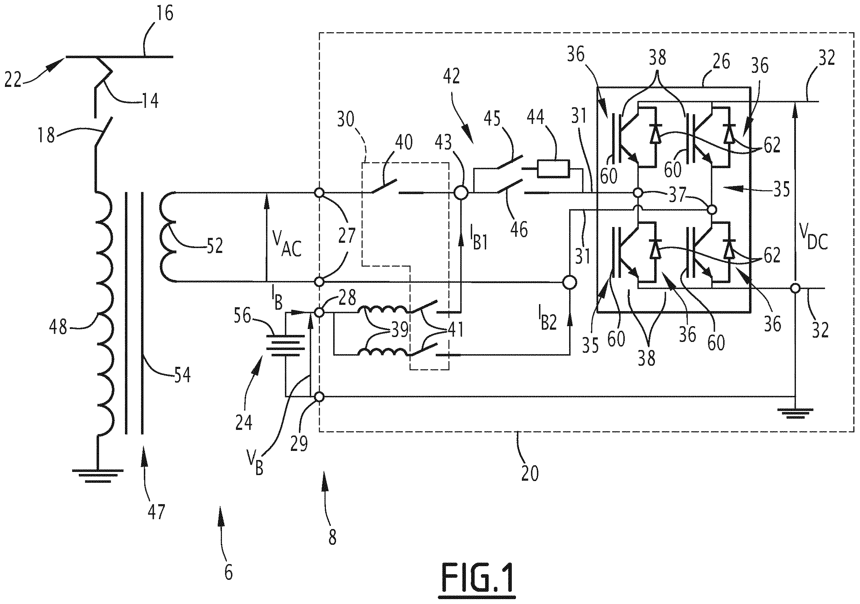

La figure 1 représente un véhicule électrique 6, notamment ferroviaire, tel qu'un train ou un tramway, comprenant une chaîne de traction 8, la chaîne de traction 8 comportant un pantographe 14 apte à être en contact avec une caténaire 16, afin de relier électriquement le véhicule électrique 6 à un réseau d'alimentation électrique.

La chaîne de traction 8 comprend un disjoncteur 18 connecté au pantographe 14. Le disjoncteur 18 est connu en soi, et n'est pas décrit plus en détail.

La chaîne de traction 8 comprend, en outre, un moteur électrique, non représenté, et un dispositif 20 d'alimentation du moteur électrique en énergie électrique, le dispositif d'alimentation 20 étant destiné à être connecté à une première source 22 d'énergie électrique alternative apte à fournir au dispositif d'alimentation 20 une tension alternative V_{AC}.

En complément facultatif, la chaîne de traction 6 comprend un circuit intermédiaire, non représenté, connecté entre le dispositif d'alimentation 20 et le moteur électrique.

La chaîne de traction 8 comprend en outre une deuxième source 24 d'énergie électrique continue connectée au dispositif d'alimentation 20 et apte à fournir une tension continue V_{B}.

Le moteur électrique est connu en soi, et permet d'entrainer en rotation des roues du véhicule électrique 6 pour le déplacement de ce dernier. Le moteur électrique est par exemple un moteur alternatif, le circuit intermédiaire convertissant alors une tenson continue V_{DC} issue du dispositif d'alimentation 20 en une tension alternative fournie en entrée du moteur.

Le circuit intermédiaire comprend, par exemple, un condensateur de filtrage connecté en sortie du dispositif d'alimentation 20, et un onduleur configuré pour convertir la tension continue V_{DC} issue du dispositif d'alimentation 20 en la tension alternative délivrée au moteur électrique.

Le dispositif d'alimentation 20 comprend un convertisseur 26 d'énergie électrique propre à délivrer en sortie du dispositif d'alimentation 20 la tension continue V_{DC}, au moins deux premières bornes de connexion 27 destinées à être connectées à la première source 22, ainsi qu'une deuxième borne de connexion 28 et une troisième borne de connexion 29 destinées à être connectées à la deuxième source 24. Dans l'exemple de la figure 1, le dispositif d'alimentation 20 comprend exactement deux premières bornes de connexion 27.

Le dispositif d'alimentation 20 comprend en outre un module de commutation 30 connecté entre les premières bornes de connexion 27, la deuxième borne de connexion 28, et le convertisseur 26.

Le convertisseur 26 comporte au moins deux bornes d'entrée 31, et deux bornes de sortie 32.

Le convertisseur 26 est configuré pour convertir une tension reçue en ses bornes d'entrée 31 en la tension continue V_{DC}, délivrée entre ses bornes de sortie 32.

Le convertisseur 26 comprend, pour chaque borne d'entrée 31, un bras de commutation 35. Dans l'exemple de la figure 1, le convertisseur 26 comporte exactement deux bornes d'entrée 31 et deux bras de commutation 35.

Chaque bras de commutation 35 comporte deux demi-bras de commutation 36 connectés en série entre les deux bornes de sorties 32 et reliés entre eux en un point intermédiaire 37, le point intermédiaire 37 étant connecté à une borne d'entrée 31 respective.

Chaque demi-bras de commutation 36 comporte un ou plusieurs interrupteurs 38, les interrupteurs 38 étant connectés en série le cas échéant. Dans l'exemple de la figure 1, chaque demi-bras de commutation 36 comprend un unique interrupteur 38.

En variante non représentée, chaque demi-bras de commutation 36 comporte N demi-branches de commutation connectées en parallèle, N étant un nombre entier supérieur ou égal à 2, chaque demi-branche de commutation comportant au moins un interrupteur 38. Chaque demi-bras de commutation 36 comporte alors au moins N interrupteurs 38.

Le convertisseur 26 comprend en outre un module de commande, non représenté, configuré pour commander les interrupteurs 38.

Chaque interrupteur 38 comprend, par exemple, un composant semi-conducteur commandable de commutation 60 et une diode 62 connectée en antiparallèle du composant semi-conducteur commandable de commutation 60.

Comme connu en soi, chaque composant semi-conducteur commandable de commutation 60 comporte deux électrodes de conduction et une électrode de commande, chaque composant semi-conducteur commandable de commutation 60 étant commandable, via son électrode de commande, entre un état parmi un état passant dans lequel le courant circule entre les électrodes de conduction, et un état bloqué dans lequel le courant ne circule pas entre les électrodes de conduction. La diode 62 est alors connectée entre les électrodes de conduction.

Le module de commande est configuré pour fonctionner selon un premier mode de conversion lorsque le module de commutation 30 est dans une première configuration, et selon un deuxième mode de conversion lorsque le module de commutation 30 est dans une deuxième configuration.

Lorsque le module de commande fonctionne dans le premier mode de conversion, le convertisseur 26 est configuré pour convertir la tension alternative V_{AC} issue des premières bornes de connexion 27, en la tension continue V_{DC}. Le convertisseur 26 a alors une fonction de hacheur élévateur et redresseur.

Lorsque le module de commande fonctionne dans le deuxième mode de conversion, le convertisseur 26 est configuré pour convertir la tension continue V_{B} issue des deuxième et troisième bornes de connexion 28, 29 en une autre tension continue V_{DC}, l'autre tension continue V_{DC} ayant de préférence une valeur supérieure à la tension entre les deuxième et troisième bornes de connexion 28, 29. Le convertisseur 26 a alors une fonction de hacheur, de préférence de hacheur élévateur (de l'anglais *boost*)*.*

Le module de commande comporte, par exemple, un composant logique programmable, tel qu'un FPGA (de l'anglais *Field-Programmable Gate Array*)*.*

Le module de commande est, par exemple, connecté à l'électrode de commande de chaque composant semi-conducteur commandable de commutation 60 et apte à délivrer un signal de commande respectif. En particulier, le module de commande est apte à délivrer un signal de commande en fonction du mode de fonctionnement dans lequel il opère parmi les premier et deuxième modes de fonctionnement, afin d'effectuer la conversion d'énergie correspondante.

Au moins un composant semi-conducteur commandable de commutation 60 est de préférence un transistor, chaque composant semi-conducteur commandable de commutation 60 étant de préférence encore un transistor.

Au moins un composant semi-conducteur commandable de commutation 60 est par exemple un transistor à effet de champ, également appelé FET (de l'anglais *Field-Effect Transistor*), de préférence un transistor à effet de champ à grille isolée, plus couramment appelé MOSFET ou transistor à effet de champ à structure métal-oxyde-semi-conducteur (de l'anglais *Metal-Oxide Semiconductor Field Effect Transistor*)*.* Chaque composant semi-conducteur commandable de commutation 60 est de préférence un transistor MOSFET. Les électrodes de conduction sont alors des électrodes de drain et de source, et l'électrode de commande est une électrode de grille.

Par exemple, au moins un composant semi-conducteur commandable de commutation 60 est réalisé en carbure de silicium, également appelé SiC (de l'anglais Silicon Carbide). Chaque composant semi-conducteur commandable de commutation 60 est de préférence réalisé en carbure de silicium.

En variante, chaque composant semi-conducteur commandable de commutation 60 est un transistor bipolaire à grille isolée, également appelé IGBT (de l'anglais *Insulated-Gate Bipolar Transistor*)*.* Les électrodes de conduction sont alors des électrodes de collecteur et d'émetteur, et l'électrode de commande est une électrode de grille.

En variante encore, chaque composant semi-conducteur commandable de commutation 60 est un thyristor, par exemple un thyristor à extinction par la gâchette, également appelé thyristor GTO (de l'anglais Gâte Turn-Off Thyristor).

La troisième borne de connexion 29 est connectée à l'une des bornes de sortie 32.

Le module de commutation 30 est apte à commuter entre la première configuration dans laquelle chacune des premières bornes 27 est reliée à une borne d'entrée 31 respective du convertisseur 26, et la deuxième configuration dans laquelle la deuxième borne de connexion 28 est reliée à au moins deux bornes d'entrée 31 distinctes du convertisseur 26.

Avantageusement, lorsque le module de commutation 30 est dans la deuxième configuration, la deuxième borne de connexion 28 est reliée à chacune des bornes d'entrée 31 distinctes du convertisseur 26 via une bobine électromagnétique 39.

Dans l'exemple de la figure 1, le module de commutation 30 comprend un premier contacteur 40 connecté entre l'une des premières bornes de connexion 27 et l'une des bornes d'entrées 31 du convertisseur 26. Le module de commutation 30 comprend, pour chaque borne d'entrée 31 à laquelle est reliée la deuxième borne de connexion 28 lorsque le module de commutation est dans la deuxième configuration, un deuxième contacteur 41 connecté entre la deuxième borne 28 de connexion et ladite borne d'entrée 31, plus précisément entre l'une des bobines électromagnétiques 39 et ladite borne d'entrée 31.

Le module de commutation 30 comprend, en outre, une unité de commande, non représentée, apte à commander les premier 40 et deuxièmes 41 contacteurs, l'unité de commande étant configurée pour commander le premier contacteur 40 dans un état fermé et les deuxièmes contacteurs 41 dans un état ouvert lorsque le module de commutation 30 est dans la première configuration, et pour commander le premier contacteur 40 dans un état ouvert et au moins un deuxième contacteur 41 dans un état fermé lorsque le module de commutation 30 est dans la deuxième configuration.

Avantageusement, l'unité de commande est configurée pour commander chaque deuxième contacteur 41 dans un état fermé lorsque le module de commutation 30 est dans la deuxième configuration.

En complément, le module de commutation 30 est configuré pour définir le mode de conversion du module de commande du convertisseur 26, le premier mode de conversion étant défini lorsque le module de commutation 30 est dans la première configuration, et le deuxième mode de conversion étant défini lorsque le module de commutation 30 est dans la deuxième configuration.

En complément facultatif, le dispositif d'alimentation 20 comprend en outre un module de précharge 42 connecté entre le premier contacteur 40 et la borne d'entrée 31 à laquelle le premier contacteur 40 est connecté.

Le module de précharge 42 est configuré pour limiter le courant circulant dans les interrupteurs 38 lors de la première mise sous tension de la chaîne de traction 8, pour charger le condensateur de filtrage.

Avantageusement, le module de précharge 42 est en outre connecté entre l'un des deuxièmes contacteurs 41 et la borne d'entrée 31 à laquelle ledit deuxième contacteur 41 est relié. Plus précisément, le module de précharge 42 est connecté entre un nœud 43 et l'une des bornes d'entrée 31, le nœud 43 étant connecté au premier contacteur 40 et à l'un des deuxièmes contacteurs 41.

Le module de précharge 42 comprend une résistance de précharge 44 en série avec un contacteur de précharge 45, et un contacteur de court-circuitage 46, le contacteur de court-circuitage 46 étant connecté en parallèle de la résistance de précharge 44 et du contacteur de précharge 45.

Le contacteur de précharge 45 et le contacteur de court-circuitage 46 sont configurés pour être commutés entre un état parmi un état fermé dans lequel le courant circule dans le contacteur de précharge 45 ou le contacteur de court-circuitage 46, et un état ouvert dans lequel le courant ne circule pas dans le contacteur de précharge 45 ou le contacteur de court-circuitage 46.

En complément facultatif, la chaîne de traction 8 comprend un transformateur 47 de tension comportant un enroulement primaire 48 apte à être connecté au pantographe 14 via le disjoncteur 18, un enroulement secondaire 52 apte à être connecté aux premières bornes de connexion 27, et un noyau magnétique 54 disposé entre l'enroulement primaire 48 et l'enroulement secondaire 52.

Le transformateur 47 est apte à diminuer l'amplitude d'une tension alternative délivrée par la caténaire 16 via le pantographe 14 et le disjoncteur 18, en fonction d'un rapport de transformation, et à délivrer à son enroulement secondaire 52 la tension alternative V_{AC}.

Dans l'exemple de la figure 1, la deuxième source 24 comprend une batterie électrique 56 connectée entre les deuxième et troisième bornes 28, 29, apte à délivrer la tension continue V_{B} entre les deuxième et troisième bornes 28, 29.

Alternativement, la deuxième source 24 comprend une pile à combustible, ou n'importe quel type de système de stockage d'énergie, connectée entre les deuxième et troisième bornes 28, 29, apte à délivrer la tension continue V_{B} entre les deuxième et troisième bornes 28, 29.

Alternativement encore, la deuxième source 24 comprend une pile à combustible couplée à une batterie électrique, ou à n'importe quel type de système de stockage d'énergie.

Le fonctionnement du dispositif d'alimentation 20 va être à présent décrit.

Lorsque le véhicule électrique 6 est relié électriquement à un réseau d'alimentation via le pantographe 14 et la caténaire 16, la première source 22 est utilisée pour alimenter le moteur électrique, le module de commutation 30 est dans la première configuration, et le module de commande fonctionne dans le premier mode de conversion. Le convertisseur 26 permet alors de convertir la tension alternative V_{AC} délivrée par la première source 22 aux premières bornes 27, en la tension continue V_{DC} en les bornes de sortie 32.

Lorsque le véhicule électrique 6 n'est pas relié électriquement à un réseau d'alimentation et est donc dans un régime dit autonome, la deuxième source 24 est utilisée pour alimenter le moteur électrique, le module de commutation 30 est alors dans la deuxième configuration, et le module de commande fonctionne dans le deuxième mode de conversion. Le convertisseur 26 permet alors de convertir la tension continue V_{B} délivrée par la deuxième source 24 aux deuxième et troisième bornes 28, 29, en la tension continue V_{DC} en les bornes de sortie 32.

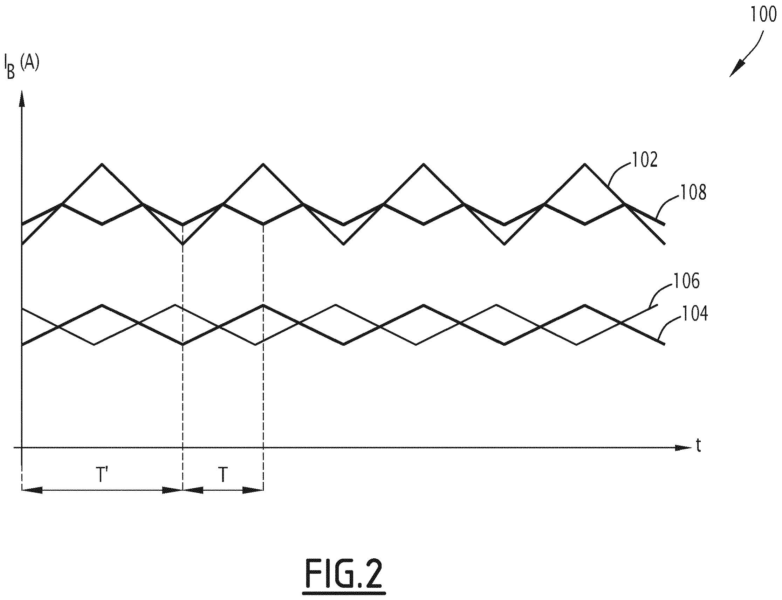

La figure 2 représente un graphe 100 de l'évolution temporelle d'une intensité I_{B} d'un courant circulant dans la deuxième source 24 lorsque le véhicule électrique 6 de la figure 1 est en régime autonome, suivant différents cas.

Le graphe 100 comprend une courbe 102 représentant l'évolution temporelle d'une intensité I_{B} du courant circulant dans la deuxième source 24 lorsqu'un unique deuxième contacteur 41 est en état fermé, les courbes 104 et 106 représentant l'évolution temporelle d'une intensité I_{B1}, et respectivement d'une intensité I_{B2}, du courant circulant dans un deuxième contacteur 41 respectif lorsque les deux deuxièmes contacteurs 41 sont en état fermé, et la courbe 108 représentant l'intensité I_{B} du courant circulant dans la deuxième source 24 lorsque les deux deuxièmes contacteurs 41 sont en état fermé.

Lorsque les deux deuxièmes contacteurs 41 sont en état fermé, l'intensité I_{B} (courbe 108) est alors la somme des intensités I_{B1} et I_{B2} (courbes 104 et 106).

L'homme du métier remarquera que l'amplitude de l'intensité I_{B} est plus faible lorsque les deux contacteurs 41 sont en état fermé. En outre, la période T de l'intensité I_{B} lorsque les deux contacteurs 41 sont en état fermé est plus faible que la période T' lorsqu'un unique contacteur 41 est en état fermé.

L'utilisation de plusieurs bras de commutation 35 pour la conversion de la tension V_{B} permet alors de limiter l'ondulation de courant de la deuxième source 24, et donc de diminuer l'usure de la batterie 56, ou alternativement de la pile à combustible ou de de n'importe quel type de système de stockage d'énergie compris par la deuxième source 24, celle-ci étant sensible à une ondulation de courant trop élevée et à une fréquence d'oscillation trop faible. Cela permet aussi d'augmenter la puissance convertie par le convertisseur 26, à caractéristiques identiques des interrupteurs 38.

Lors du démarrage du moteur électrique, quand le véhicule électrique 6 n'est pas en régime autonome, le module de précharge 42 est commandé, pour permettre la précharge du condensateur de filtrage du circuit intermédiaire, selon les étapes suivantes.

Initialement, le contacteur de précharge 45 est en état fermé et le contacteur de court-circuitage 46 est en état ouvert. La première ou la deuxième source est connectée au convertisseur 26 via la résistance de précharge 44, et la tension V_{DC} augmente progressivement jusqu'à atteindre une valeur finale.

Lorsque la tension V_{DC} atteint une valeur proche, par exemple à 5%, de sa valeur finale, le contacteur de court-circuitage 46 est commuté en état fermé et court-circuite la résistance de précharge 44.

Finalement, le contacteur de précharge 45 est alors commuté en état ouvert.

La résistance de précharge 44 permet alors de limiter le courant circulant dans les interrupteurs 38 du convertisseur 26 et dans le condensateur de filtrage lors de la charge du condensateur de filtrage. Cela permet de limiter l'usure des transistors des interrupteurs 38 et le dimensionnement du condensateur de filtrage.

Lorsque le module de précharge 42 est compris entre un des deuxièmes contacteurs 41 et la bornes d'entrée 31 à laquelle ledit deuxième contacteur 41 est relié, le démarrage du moteur électrique peut alors être opéré lorsque le véhicule électrique 6 est en en régime autonome suivant les mêmes étapes décrites plus haut.

On conçoit alors que le dispositif d'alimentation 20 permet d'alimenter le moteur électrique que le véhicule électrique soit ou pas en régime autonome. Le dispositif d'alimentation 20 permet de s'affranchir d'un convertisseur supplémentaire dédié à convertir l'énergie électrique issue de la deuxième source d'énergie électrique continue, en fonctionnant selon les deux modes de conversion précités.
les deux contacteurs 41 sont en état fermé est plus faible que la période T' lorsqu'un unique contacteur 41 est en état fermé.

L'utilisation de plusieurs bras de commutation 35 pour la conversion de la tension V_{B} permet alors de limiter l'ondulation de courant de la deuxième source 24, et donc de diminuer l'usure de la batterie 56, ou alternativement de la pile à combustible ou de de n'importe quel type de système de stockage d'énergie compris par la deuxième source 24, celle-ci étant sensible à une ondulation de courant trop élevée et à une fréquence d'oscillation trop faible. Cela permet aussi d'augmenter la puissance convertie par le convertisseur 26, à caractéristiques identiques des interrupteurs 38.

Lors du démarrage du moteur électrique, quand le véhicule électrique 6 n'est pas en régime autonome, le module de précharge 42 est commandé, pour permettre la précharge du condensateur de filtrage du circuit intermédiaire, selon les étapes suivantes.

Initialement, le contacteur de précharge 45 est en état fermé et le contacteur de court-circuitage 46 est en état ouvert. La première ou la deuxième source est connectée au convertisseur 26 via la résistance de précharge 44, et la tension V_{DC} augmente progressivement jusqu'à atteindre une valeur finale.

Lorsque la tension V_{DC} atteint une valeur proche, par exemple à 5%, de sa valeur finale, le contacteur de court-circuitage 46 est commuté en état fermé et court-circuite la résistance de précharge 44.

Finalement, le contacteur de précharge 45 est alors commuté en état ouvert.

La résistance de précharge 44 permet alors de limiter le courant circulant dans les interrupteurs 38 du convertisseur 26 et dans le condensateur de filtrage lors de la charge du condensateur de filtrage. Cela permet de limiter l'usure des transistors des interrupteurs 38 et le dimensionnement du condensateur de filtrage.

Lorsque le module de précharge 42 est compris entre un des deuxièmes contacteurs 41 et la bornes d'entrée 31 à laquelle ledit deuxième contacteur 41 est relié, le démarrage du moteur électrique peut alors être opéré lorsque le véhicule électrique 6 est en en régime autonome suivant les mêmes étapes décrites plus haut.

On conçoit alors que le dispositif d'alimentation 20 permet d'alimenter le moteur électrique que le véhicule électrique soit ou pas en régime autonome. Le dispositif d'alimentation 20 permet de s'affranchir d'un convertisseur supplémentaire dédié à convertir l'énergie électrique issue de la deuxième source d'énergie électrique continue, en fonctionnant selon les deux modes de conversion précités.

## Revendications

1. Dispositif d'alimentation (20) en énergie électrique pour véhicule électrique (6), notamment ferroviaire, comprenant :
- un convertisseur (26) d'énergie électrique comportant :
+ au moins deux bornes d'entrée (31), et deux bornes de sortie (32),
+ pour chaque borne d'entrée (31), un bras de commutation (35) comportant deux demi-bras de commutation (36) connectés en série entre les deux bornes de sorties (32) et reliés entre eux en un point intermédiaire (37), le point intermédiaire (37) étant connecté à ladite borne d'entrée (31), chaque demi-bras de commutation (36) comportant au moins un interrupteur (38), et
+ un module de commande configuré pour commander les interrupteurs (38),
- au moins deux premières bornes de connexion (27) destinées à être connectées à une première source (22) d'énergie électrique alternative, et
- une deuxième et une troisième borne de connexion (28, 29) destinées à être connectées à une deuxième source (24) d'énergie électrique continue,
**caractérisé en ce qu'**il comprend en outre, un module de commutation (30) connecté entre les premières bornes de connexion (27), la deuxième borne de connexion (28), et les bornes d'entrée (31) du convertisseur (26), le module de commutation (30) étant apte à commuter entre une première configuration dans laquelle chacune des premières bornes de connexion (27) est reliée à une borne d'entrée (31) respective du convertisseur (26), et une deuxième configuration dans laquelle la deuxième borne de connexion (28) est reliée à au moins deux bornes d'entrée (31) distinctes du convertisseur (26),
et **en ce que** le module de commande est configuré pour fonctionner selon un premier mode de conversion lorsque le module de commutation (30) est dans la première configuration, et selon un deuxième mode de conversion lorsque le module de commutation (30) est dans la deuxième configuration.

2. Dispositif d'alimentation (20) selon la revendication 1, dans lequel lorsque le module de commande est selon le premier mode de conversion, le convertisseur (26) est configuré pour convertir une tension alternative (V_{AC}) issue des premières bornes de connexion (27), en une tension continue (V_{DC}), et
lorsque le module de commande est selon le deuxième mode de conversion, le convertisseur est configuré pour convertir une tension continue (V_{B}) issue des deuxième et troisième bornes de connexion (28, 29), en une autre tension continue (V_{DC}).

3. Dispositif d'alimentation (20) selon la revendication 2, dans lequel lorsque le module de commande est selon le deuxième mode de conversion, l'autre tension continue (V_{DC}) a une valeur supérieure à la tension continue (V_{B}) entre les deuxième et troisième bornes de connexion (28, 29).

4. Dispositif d'alimentation (20) selon l'une quelconque des revendications précédentes, dans lequel le module de commutation (30) comprend :
- un premier contacteur (40) connecté entre l'une des premières bornes de connexion (27) et l'une des bornes d'entrées (31) du convertisseur (26),
- pour chaque borne d'entrée (31) à laquelle est reliée la deuxième borne de connexion (28) lorsque le module de commutation (30) est dans la deuxième configuration, un deuxième contacteur (41) connecté entre la deuxième borne de connexion (28) et ladite borne d'entrée (31), et
- une unité de commande apte à commander le premier (40) et les deuxièmes (41) contacteurs.

5. Dispositif d'alimentation (20) selon la revendication 4, dans lequel l'unité de commande est apte à commander le premier contacteur (40) dans un état fermé et les deuxièmes contacteurs (41) dans un état ouvert lorsque le module de commutation (30) est dans la première configuration, et à commander le premier contacteur (40) dans un état ouvert et au moins un deuxième contacteur (41), de préférence chaque deuxième contacteur (41), dans un état fermé lorsque le module de commutation (30) est dans la deuxième configuration.

6. Dispositif d'alimentation (20) selon l'une quelconque des revendications précédentes, dans lequel le module de commutation (30) est configuré pour relier la deuxième borne de connexion (28) à chaque borne d'entrée (31) du convertisseur (26) via une bobine électromagnétique (39) lorsque le module de commutation (30) est dans la deuxième configuration.

7. Dispositif d'alimentation (20) selon l'une quelconque des revendications précédentes, dans lequel le dispositif d'alimentation (20) comprend en outre, entre le module de commutation (30) et l'une des borne d'entrée (31), un module de précharge (42) comportant une résistance de précharge (44) connectée en série avec un contacteur de précharge (45), et un contacteur de court-circuitage (46), le contacteur de court-circuitage (46) étant connecté en parallèle de la résistance de précharge (44) et du contacteur de précharge (45).

8. Dispositif d'alimentation (20) selon l'une quelconque des revendications précédentes, dans lequel chaque interrupteur (38) comporte un composant semi-conducteur commandable de commutation (60) et une diode (62) connectée en antiparallèle du composant semi-conducteur commandable de commutation (60).

9. Chaîne de traction (8) pour un véhicule électrique (6), notamment ferroviaire, comprenant un moteur électrique et un dispositif (20) d'alimentation du moteur électrique en énergie électrique,
**caractérisée en ce que** le dispositif d'alimentation (20) est selon l'une quelconque des revendications précédentes.

10. Véhicule électrique (6), notamment ferroviaire, comprenant une chaîne de traction (8), **caractérisé en ce que** la chaîne de traction (8) est selon la revendication précédente.

## Patentansprüche

1. Vorrichtung zur Versorgung (20) mit elektrischer Energie für ein, insbesondere Schiene-, Elektrofahrzeug (6), aufweisend:
- einen Umwandler (26) für elektrische Energie, welcher aufweist:
+ zumindest zwei Eingangsklemmen (31) und zwei Ausgangsklemmen (32),
+ für jede Eingangsklemme (31) einen Schaltarm (35), welcher zwei Schalt-Halbarme (36) aufweist, welche in Reihe zwischen die beiden Ausgangsklemmen (32) geschaltet sind und welche miteinander an einem Zwischenpunkt (37) verbunden sind, wobei der Zwischenpunkt (37) mit der besagten Eingangsklemme (31) verbunden ist, wobei jeder Schalt-Halbarm (36) zumindest einen Unterbrecher (38) aufweist, und
+ ein Modul zum Steuern, welches eingerichtet ist, um die Unterbrecher (38) zu steuern,
- zumindest zwei erste Verbindungsklemmen (27), welche dazu bestimmt sind, mit einer ersten Quelle (22) für elektrische Wechselstrom-Energie verbunden zu sein, und
- eine zweite und eine dritte Verbindungsklemme (28, 29), welche dazu bestimmt sind, mit einer zweiten Quelle (24) für elektrische Gleichstrom-Energie verbunden zu sein,
**dadurch gekennzeichnet, dass** sie ferner aufweist ein Schaltmodul (30), welches zwischen die ersten Verbindungsklemmen (27), die zweite Verbindungklemme (28) und die Eingangsklemmen (31) des Umwandlers (26) geschaltet ist, wobei das Schaltmodul (30) imstande ist, zwischen einer ersten Konfiguration, in welcher jede der ersten Verbindungsklemmen (27) mit einer jeweiligen Eingangsklemme (31) des Umwandlers (26) verbunden ist, und einer zweiten Konfiguration, in welcher die zweite Verbindungsklemme (28) mit zumindest zwei verschiedenen Eingangsklemmen (31) des Umwandlers (26) verbunden ist, umzuschalten,
und dadurch, dass das Modul zum Steuern eingerichtet ist, um gemäß einem ersten Umwandlungsmodus zu arbeiten, wenn das Schaltmodul (30) in der ersten Konfiguration ist, und gemäß einem zweiten Umwandlungsmodus, wenn das Schaltmodul (30) in der zweiten Konfiguration ist.

2. Vorrichtung zur Versorgung (20) gemäß Anspruch 1, wobei, wenn das Modul zum Steuern gemäß dem ersten Umwandlungsmodus ist, der Umwandler (26) eingerichtet ist, um eine Wechselspannung (V_{AC}), welche von den ersten Verbindungsklemmen (27) stammt, in eine Gleichspannung (V_{DC}) umzuwandeln, und,
wenn das Modul zum Steuern gemäß dem zweiten Umwandlungsmodus ist, der Umwandler eingerichtet ist, um eine Gleichspannung (V_{B}), welche von der zweiten und der dritten Verbindungsklemme (28, 29) stammt, in eine andere Gleichspannung (V_{DC}) umzuwandeln.

3. Vorrichtung zur Versorgung (20) gemäß Anspruch 2, wobei, wenn das Modul zum Steuern gemäß dem zweiten Umwandlungsmodus ist, die andere Gleichspannung (V_{DC}) einen Wert hat, welcher größer ist als eine Gleichspannung (V_{B}) zwischen der zweiten und der dritten Verbindungsklemme (28, 29).

4. Vorrichtung zur Versorgung (20) gemäß irgendeinem der vorherigen Ansprüche, wobei das Schaltmodul (30) aufweist:
- einen ersten Verbinder (40), welcher zwischen die eine der ersten Verbindungsklemmen (27) und die eine der Eingangsklemmen (31) des Umwandlers (26) geschaltet ist,
- für jede Eingangsklemme (31), mit welcher die zweite Verbindungsklemme (28) verbunden ist, wenn das Schaltmodul (30) in der zweiten Konfiguration ist, einen zweiten Verbinder (41), welcher zwischen die zweite Verbindungsklemme (28) und die besagte Eingangsklemme (31) geschaltet ist, und
- eine Einheit zum Steuern, welche imstande ist, den ersten (40) und die zweiten (41) Verbinder zu steuern.

5. Vorrichtung zur Versorgung (20) gemäß Anspruch 4, wobei die Einheit zum Steuern imstande ist, den ersten Verbinder (40) in einen Geschlossen-Zustand und die zweiten Verbinder (41) in einen Offen-Zustand zu steuern, wenn das Schaltmodul (30) in der ersten Konfiguration ist, und den ersten Verbinder (40) in einen Offen-Zustand und zumindest einen zweiten Verbinder (41), vorzugsweise jeden zweiten Verbinder (41), in einen Geschlossen-Zustand zu steuern, wenn das Schaltmodul (30) in der zweiten Konfiguration ist.

6. Vorrichtung zur Versorgung (20) gemäß irgendeinem der vorherigen Ansprüche, wobei das Schaltmodul (30) eingerichtet ist, um die zweite Verbindungsklemme (28) mit jeder Eingangsklemme (31) des Umwandlers (26) via eine elektromagnetische Spule (39) zu verbinden, wenn das Schaltmodul (30) in der zweiten Konfiguration ist.

7. Vorrichtung zur Versorgung (20) gemäß irgendeinem der vorherigen Ansprüche, wobei die Vorrichtung zur Versorgung (20) ferner aufweist, zwischen dem Schaltmodul (30) und der einen der Eingangsklemmen (31), ein Vorlade-Modul (42), welches aufweist einen Vorlade-Widerstand (44), welcher in Reihe mit einem Vorlade-Verbinder (45) geschaltet ist, und einen Kurzschluss-Verbinder (46), wobei der Kurzschluss-Verbinder (46) parallel zum Vorlade-Widerstand (44) und zum Vorlade-Verbinder (45) geschaltet ist.

8. Vorrichtung zur Versorgung (20) gemäß irgendeinem der vorherigen Ansprüche, wobei jeder Unterbrecher (38) aufweist eine schaltsteuerbare Halbleiter-Komponente (60) und eine Diode (62), welche antiparallel zur schaltsteuerbaren Halbleiter-Komponente (60) geschaltet ist.

9. Traktionskette (8) für ein, insbesondere Schiene-, Elektrofahrzeug (6), aufweisend einen Elektromotor und eine Vorrichtung (20) zur Versorgung des Elektromotors mit elektrischer Energie,
**dadurch gekennzeichnet, dass** die Vorrichtung (20) gemäß irgendeinem der vorherigen Ansprüche ist.

10. Insbesondere Schiene-, Elektrofahrzeug (6), aufweisend eine Traktionskette (8), **dadurch gekennzeichnet, dass** die Traktionskette (8) gemäß dem vorherigen Anspruch ist.

## Claims

1. Electrical energy supply device (20) for an electric vehicle (6), especially a railway vehicle, comprising:
- an electrical energy converter (26) comprising:
+ at least two input terminals (31), and two output terminals (32),
+ for each input terminal (31) a switching arm (35) comprising two switching half-arms (36) which are connected in series between the two output terminals (32) and connected together at an intermediate point (37), the intermediate point (37) being connected to said input terminal (31), each switching half-arm (36) comprising at least one switching device (38), and
+ a control module configured to control the switching devices (38),
- at least two first connection terminals (27) which are to be connected to a first source (22) of alternating electrical energy, and
- a second and a third connection terminal (28, 29) which are to be connected to a second source (24) of direct electrical energy,
**characterised in that** it further comprises a switching module (30) connected between the first connection terminals (27), the second connection terminal (28) and the input terminals (31) of the converter (26), the switching module (30) being capable of switching between a first configuration in which each of the first connection terminals (27) is connected to a respective input terminal (31) of the converter (26), and a second configuration in which the second connection terminal (28) is connected to at least two separate input terminals (31) of the converter (26),
and **in that** the control module is configured to function in accordance with a first conversion mode when the switching module (30) is in the first configuration and in accordance with a second conversion mode when the switching module (30) is in the second configuration.

2. Supply device (20) according to claim 1, wherein, when the control module is in accordance with the first conversion mode, the converter (26) is configured to convert an alternating voltage (V_{AC}) coming from the first connection terminals (27) into a direct voltage (V_{DC}), and
when the control module is in accordance with the second conversion mode, the converter is configured to convert a direct voltage (V_{B}) coming from the second and third connection terminals (28, 29) into another direct voltage (V_{DC}).

3. Supply device (20) according to claim 2, wherein, when the control module is in accordance with the second conversion mode, the other direct voltage (V_{DC}) has a value greater than the direct voltage (V_{B}) between the second and third connection terminals (28, 29).

4. Supply device (20) according to any one of the preceding claims, wherein the switching module (30) comprises:
- a first switch (40) connected between one of the first connection terminals (27) and one of the input terminals (31) of the converter (26),
- for each input terminal (31) to which the second connection terminal (28) is connected when the switching module (30) is in the second configuration, a second switch (41) connected between the second connection terminal (28) and said input terminal (31), and
- a control unit capable of controlling the first (40) and the second (41) switches.

5. Supply device (20) according to claim 4, wherein the control unit is capable of controlling the first switch (40) to a closed state and the second switches (41) to an open state when the switching module (30) is in the first configuration, and of controlling the first switch (40) to an open state and at least one second switch (41), preferably each second switch (41), to a closed state when the switching module (30) is in the second configuration.

6. Supply device (20) according to any one of the preceding claims, wherein the switching module (30) is configured to connect the second connection terminal (28) to each input terminal (31) of the converter (26) *via* an electromagnetic coil (39) when the switching module (30) is in the second configuration.

7. Supply device (20) according to any one of the preceding claims, wherein the supply device (20) further comprises, between the switching module (30) and one of the input terminals (31), a precharge module (42) comprising a precharge resistor (44) connected in series with a precharge switch (45), and a short-circuit switch (46), the short-circuit switch (46) being connected in parallel with the precharge resistor (44) and the precharge switch (45).

8. Supply device (20) according to any one of the preceding claims, wherein each switching device (38) comprises a controllable semiconductor switching component (60) and a diode (62) which is connected in antiparallel with the controllable semiconductor switching component (60).

9. Traction chain (8) for an electric vehicle (6), especially a railway vehicle, comprising an electric motor and a device (20) for supplying the electric motor with electrical energy,
**characterised in that** the supply device (20) is in accordance with any one of the preceding claims.

10. Electric vehicle (6), especially railway vehicle, comprising a traction chain (8), **characterised in that** the traction chain (8) is in accordance with the preceding claim.
